# FASCICULE DE BREVET EUROPEEN

(11) **EP 0 940 588 B1**
(45) Date de publication et mention de la délivrance du brevet: **20.12.2000**
(21) Numéro de dépôt: 98440041.6
(22) Date de dépôt: 02.03.1998
(51) Int. Cl.: F16B 12/40, F16B 12/32, A47B 17/03

(54) **Pièce de liaison entre deux poutrelles qui y sont coulissables**
Verbindungsstück für zwei darin bewegbare Trägerprofile
Connecting piece for two small beams slidable therein

(43) Date de publication de la demande: 08.09.1999
(73) Titulaire: STEELCASE STRAFOR (S.A.), F-67200 Strasbourg (FR)
(72) Inventeur: Flanet, Daniel, 67300 Schiltigheim (FR)
(74) Mandataire: Littolff, Denis

(56) Documents cités:
- DE-A- 4 127 127
- FR-A- 1 526 947
- FR-A- 2 497 885

## Description

La présente invention concerne une pièce de liaison entre deux poutrelles appartenant à une structure notamment utilisable dans le domaine du mobilier de bureau. Plus particulièrement, elle s'applique aux bureaux modulables suivant de multiples configurations au gré de l'utilisateur individuel ou du concepteur d'espaces de travail tels que des bureaux paysagers collectifs (DE 41 27 127 A).

Ces bureaux sont traditionnellement composés d'un certain nombre de composants standards configurables pour obtenir une grande variété de formes, comprenant essentiellement des plans de travail horizontaux, des panneaux et modules verticaux de séparation, des piétements et des éléments d'une structure supportant notamment les plans horizontaux et les panneaux verticaux.

Lesdits éléments sont en particulier des longerons, traverses, colonnes et colonnettes constituant génériquement un ensemble de poutrelles fixées les unes aux autres et aux piétements, et réalisant l'ossature ou structure précitée, à laquelle sont fixés les éléments plus directement fonctionnels pour l'usager.

La conception et la réalisation de modules finis intégrables dans des bureaux paysagers suscitent de nombreuses difficultés, dont la nécessité de prévoir à l'avance et de gérer ensuite les divers composants entrant dans la configuration à réaliser. Le grand nombre de solutions d'assemblage, reflétant la variété des formes et des combinaisons possibles avec un nombre réduit d'éléments de base, aboutit paradoxalement dans la plupart de l'offre existante à un manque de souplesse, puisqu'il devient difficile de modifier une configuration après la conception initiale, du fait de la simplification imposée aux composants.

Dans certains systèmes existants, il est cependant possible de procéder à des changements, notamment par ajout d'éléments, mais les pièces de liaison à cet effet doivent avoir été installées dès l'origine, sous peine de devoir démonter et remonter l'ensemble avec l'élément ajouté.

Ces pièces de liaison sont alors visibles et sans affectation fonctionnelle, et ont un effet négatif sur l'esthétique de l'ensemble. Elles sont au surplus disposées de manière fixe par rapport à la structure, et ne permettent en général que des modifications limitées par ajout d'éléments selon des configurations prévues à l'origine et en nombre nécessairement restreint.

La présente invention, qui s'applique par exemple à la fixation de panneaux verticaux de séparation sur des structures supportant des plans de travail horizontaux, s'affranchit de ces inconvénients.

Elle concerne une pièce de liaison entre deux poutrelles d'une structure également applicable à du mobilier de bureau modulable suivant de multiples configurations, notamment susceptible de comporter des panneaux verticaux et horizontaux, et elle permet d'une part un déplacement translatif par coulissement de chaque poutrelle par rapport à ladite pièce de liaison et d'autre part sa fixation en tout point de positionnement relatif. De manière essentielle, elle est caractérisée en ce que les moyens de coulissement par rapport à l'une des deux poutrelles sont constitués d'une glissière de largeur variable présentant une configuration fermée de largeur minimale correspondant à l'ajustement de ladite poutrelle dans la glissière et une configuration ouverte de largeur maximale permettant la libération de la poutrelle, ladite pièce de liaison comportant des moyens de blocage de la configuration de la glissière en n'importe quelle largeur comprise entre lesdites valeurs minimale et maximale, et un mécanisme de rappel ramenant la glissière à sa configuration de largeur minimale en l'absence de blocage.

En d'autres termes, la glissière de largeur variable permet l'accrochage de la pièce de liaison, à la manière d'une pince, à toute poutrelle, longeron, traverse, etc... de forme correspondant à celle de la glissière en position fermée, que ceux-ci soient déjà intégrés à une structure fonctionnelle ou non.

En outre, l'accrochage est aisé à l'utilisateur, réalisable sans outil en n'importe quel endroit de la poutrelle, ce qui confère à la liaison une souplesse d'utilisation exceptionnelle en regard de ce qui existait jusqu'à présent, en particulier pour une configuration de mobilier déjà en position.

Cette souplesse est encore améliorée par la possibilité de mouvement relatif entre la pièce de liaison et la seconde poutrelle. Celle-ci, dans l'exemple précité concernant la fixation de panneaux verticaux, est par hypothèse constituée d'une colonne ou colonnette sur laquelle est fixé le panneau de séparation proprement dit.

De préférence, le déplacement translatif par rapport à la seconde poutrelle est réalisé à l'aide d'un élément mâle ou coulisseau disposé à l'extrémité d'un organe relié mécaniquement à ladite pièce de liaison, qui coopère avec une glissière pratiquée dans ladite seconde poutrelle,

Cet organe muni de l'élément mâle est au surplus mobile en translation rectiligne par rapport à ladite pièce de liaison, le déplacement rectiligne étant constitutif du blocage / déblocage de ladite seconde poutrelle par rapport à la pièce de liaison par serrage / desserrage de leurs surfaces de contact respectives, provoqué par le rapprochement / éloignement de l'élément mâle et de la pièce de liaison.

Le blocage / déblocage est par exemple réalisé par boulonnage de l'organe muni de l'élément mâle dans la pièce de liaison, la réalisation du serrage / desserrage étant possible depuis l'intérieur de celle-ci uniquement lorsque la glissière de largeur variable ne loge pas de poutrelle.

Ainsi, le montage d'éléments additionnels à l'aide de la pièce de liaison selon l'invention implique un ordre d'assemblage particulier, qui ne constitue cependant pas un obstacle à la facilité de mise en oeuvre des modifications désirées, mais relève du simple bon sens. En effet, il vaut mieux procéder au réglage du positionnement relatif pièce de liaison / colonnette avant de l'installer sur la structure préexistante, car cet ensemble fonctionne presque toujours par paire, et que l'ajustement des deux individus de chaque paire s'avérerait bien plus problématique après leur installation, lorsqu'ils sont à distance l'un de l'autre.

La glissière de largeur variable comporte une mâchoire fixe et une mâchoire mobile, cette dernière coulissant dans la mâchoire fixe selon une course notamment limitée par les moyens de blocage.

Plus précisément, la mâchoire mobile comporte une première partie constituant d'une part une portion transversale de la glissière, et configurée pour s'adapter à une portion transversale correspondante d'une poutrelle, et d'autre part une surface de liaison avec une seconde partie formant tiroir coulissant dans un logement de la mâchoire fixe.

De préférence, le tiroir coulissant présente une section en forme de U à base incurvée, ladite base comportant un moyen d'accrochage d'un élément de rappel également fixé à la mâchoire fixe, et des moyens de liaison aux moyens de blocage.

La pièce de liaison, lorsqu'elle est assemblée, comporte une unité esthétique réalisée par les deux mâchoires notamment lorsqu'elles sont en position fermée.

Le logement de la mâchoire fixe destiné à recevoir ledit tiroir de la mâchoire mobile comporte au moins une surface plane d'allure parallèle à la base du U, localisée sur une rampe de la face dudit logement opposée à la base du logement et orientée vers elle, ladite base comportant au surplus une lumière s'étendant dans la direction de l'axe du mouvement de la mâchoire mobile relativement à la mâchoire fixe, et un moyen d'accrochage de l'élément de rappel.

La surface plane sur la rampe précitée, ainsi que la lumière pratiquée dans la base du logement, remplissent une fonction particulière en combinaison avec les moyens de blocage expliqués ci-après.

Ces moyens de blocage des mâchoires l'une relativement à l'autre sont opérables manuellement et consistent en une molette fixée à une tige filetée libre en rotation dans un orifice pratiqué dans le tiroir de la mâchoire mobile, et coopérant avec un écrou disposé dans un logement du tiroir, l'extrémité plane de ladite tige filetée s'appliquant au moment du blocage contre ladite surface plane équipant la rampe de la mâchoire fixe.

La lumière longitudinale pratiquée dans la base du logement permet à la molette de ne rencontrer au cours du serrage aucun obstacle qui puisse inhiber la pression que doit exercer l'extrémité plane de la tige sur la surface plane de ladite rampe pour réaliser un blocage efficace.

Selon une configuration possible, l'élément de rappel est un ressort de traction fixé à ses deux extrémités aux moyens d'accrochage prévus sous forme de crochets dans la mâchoire fixe et dans la mâchoire mobile.

Il est possible et recommandé de ne procéder au blocage des mâchoires qu'après fixation de la pince à un longeron, afin de simplifier à l'extrême les opérations de montage.

Dans ce cas, on ouvre la molette pour atteindre la position de déblocage, on écarte les mâchoires de façon à y insérer la poutrelle et on libère la mâchoire mobile qui se replace automatiquement, du fait des moyens de rappel, au contact de la mâchoire fixe, pince fermée.

Toutefois, il est à noter que le blocage étant réalisable quelle que soit la position relative des mâchoires, rien n'interdit d'ouvrir les mâchoires, de les bloquer en position ouverte, de les placer in situ et de débloquer la molette : le ressort de rappel entraîne également la fermeture automatique des mâchoires, et il suffit alors de resserrer les moyens de blocage pour que la liaison soit réalisée.

L'installation d'un panneau de séparation se fait de la manière suivante : l'opérateur installe un premier couple pince / colonnette à un endroit jugé adéquat, puis fixe le second à une distance approximativement égale à la longueur du panneau. Lors de la fixation du panneau aux colonnettes, l'opérateur peut à tout moment ajuster le positionnement relatif des pinces, et par conséquent des colonnettes, par simple déblocage des mâchoires, qui sont ensuite écartées puis déplacées le long de la poutrelle.

De même, le déplacement de la totalité d'un panneau par un seul opérateur peut être réalisé par coulissement successif d'une première pince dont la colonnette associée a été désengagée du panneau, puis coulissement du reste avant refixation du panneau à la première colonnette. Deux opérateurs peuvent bien entendu, par déblocage simultané des deux mâchoires, réaliser un déplacement de la totalité en une seule opération.

Ces avantages et d'autres afférents à la présente invention apparaîtront encore plus clairement à la lecture de la description détaillée ci-après, étayée par les figures disposées en annexe, pour lesquelles :
- la figure 1 représente une pièce de liaison ou pince selon l'invention ;
- la figure 2 montre ladite pièce en phase d'accrochage à un longeron supportant un plan de travail ;
- la figure 3 est similaire à la précédente, la fixation étant réalisée ;
- la figure 4 est une vue en perspective de la mâchoire mobile ;
- la figure 5 est une vue en perspective de la mâchoire fixe ;
- la figure 6 montre en coupe longitudinale de la mâchoire fixe.

Les figures annexées représentent un exemple possible de pièce de liaison ou pince selon la présente invention. Les références attribuées aux parties constitutives décrites dans la suite se retrouvent d'une figure à l'autre.

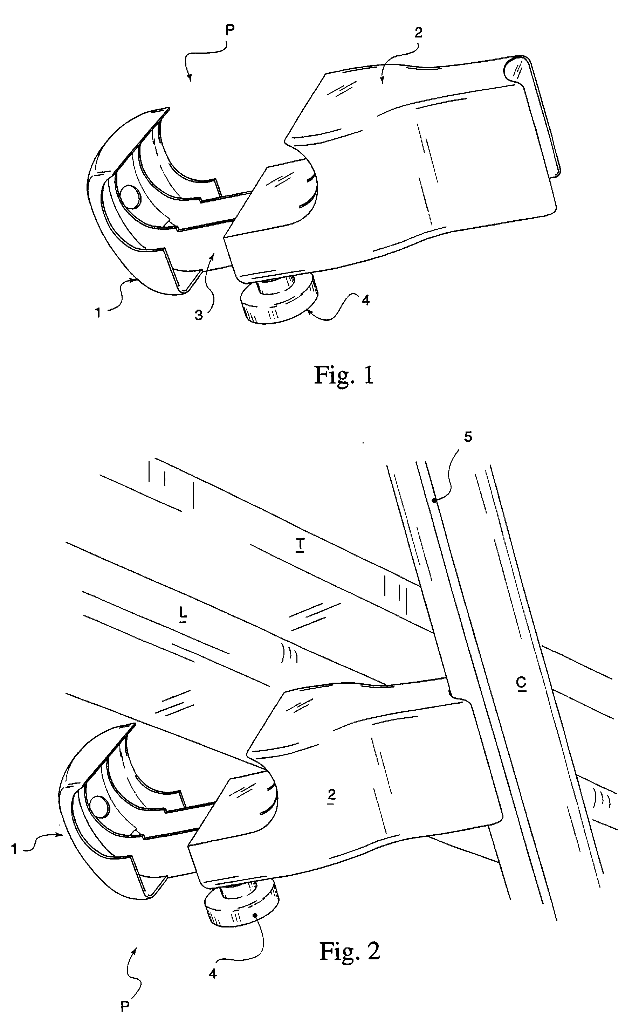

La pince (P) apparaissant en figure 1 est constituée d'un couple de mâchoires (1) et (2) ayant un unique degré de liberté l'une par rapport à l'autre : la mâchoire (1) peut s'écarter de la mâchoire (2), et elles sont par conséquent dénommées mâchoire mobile (1) et mâchoire fixe (2).

En figure 2, la pince (P) solidarisée à une colonnette (C) s'emboîte sur le cadre du bureau partiellement visible, à un longeron (L) de la structure supportant un plan de travail (T). Le longeron (L) présente en l'occurrence une section oblongue, d'où la forme correspondante de la glissière constituée entre la mâchoire mobile (1) et la mâchoire fixe (2).

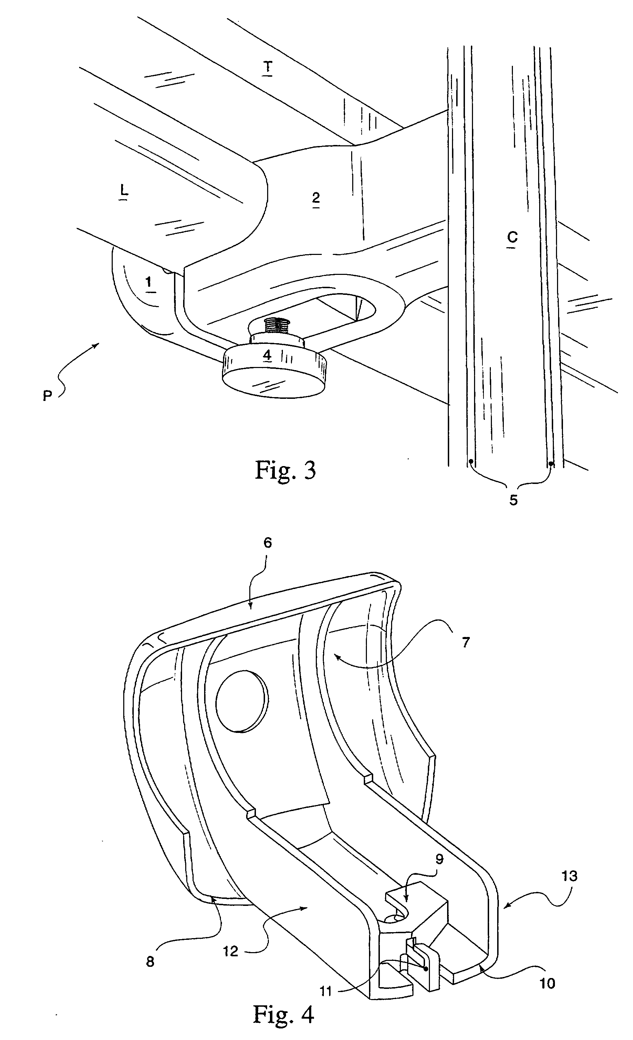

Les mêmes éléments apparaissent en figure 3, la liaison avec le longeron (L) étant alors établie. Le tiroir (3) de la mâchoire mobile (1) apparaît en figure 1, inséré dans un logement correspondant de la mâchoire fixe (2) qui sera montré en détail dans la suite. Les mâchoires fixe (2) et mobile (1) ne sont pas au contact par leurs parties inférieures, le tiroir (3) servant à ajuster la largeur de la glissière selon le longeron (L) à insérer.

Les moyens de blocage sont manuels, par exemple constitués d'une molette (4) fixée à une tige filetée, permettent le déplacement relatif, et donc la fonction de pincement des mâchoires (1, 2). La tige filetée coopère avec un écrou situé dans un logement (9) du tiroir.

Les colonnettes (C) comportent des glissières axiales (5) représentées sur leur périphérie, logeant et guidant un élément mâle ou coulisseau d'un organe rapporté à la pince (P). Le blocage / déblocage de cette liaison n'est possible que dans la situation de la figure 1, car l'accès aux moyens de commande de cette liaison se fait via la glissière constituée entre les mâchoires (1) et (2), comme on le verra dans la suite.

La figure 4 montre en détail la configuration de la mâchoire mobile (1) objet de l'exemple décrit. Elle comporte deux parties principales : une enveloppe externe (6) délimitant d'une part, dans sa zone supérieure (7), une portion transversale de la glissière, et d'autre part une surface (8) pouvant se situer à proximité de l'autre portion de glissière portée par la mâchoire fixe (2), et formant la liaison avec la base d'un tiroir (3) en U délimitant un volume creux, à base incurvée (10) comportant un crochet (11) destiné à recevoir l'extrémité d'un ressort de traction (non représenté), ainsi que le logement (9) recevant le boulon des moyens de blocage.

Les parois latérales (12, 13) du tiroir (3) constituent, via leur prolongement dans la zone supérieure (7) de l'enveloppe externe (6) de la glissière, des nervures de rigidification de la mâchoire mobile (1).

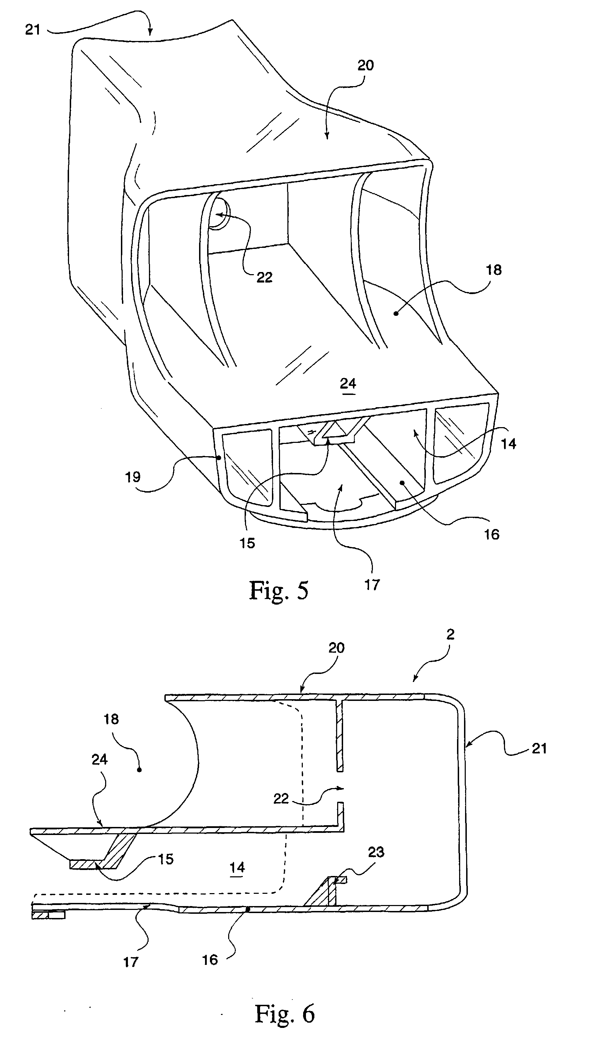

La mâchoire fixe (2) apparaît en détail en figure 5. Le logement (14) du tiroir (3) a une forme permettant à ce dernier de s'y ajuster. Il comporte en outre une excroissance ou rampe (15) dotée d'une surface plane orientée vers la base (16) du logement, laquelle comporte une lumière (17) permettant notamment le passage de la tige filetée fixée à la molette de blocage / déblocage (4). La zone (18) située immédiatement au-dessus du logement (14) constitue la seconde portion transversale de la glissière.

La surface de contact (19) constituant la bordure extrême de la mâchoire fixe (2) peut se situer, en fonction de la section du longeron (L), à proximité de la surface homologue (8) de la mâchoire mobile (1), lors du rapprochement des mâchoires (1) et (2) autour du longeron (L).

Le bras (20) prolongeant cette portion transversale (18) de glissière comporte une extrémité (21) délimitant en volume une portion de cylindre, permettant de loger la colonnette (C).

L'orifice fileté (22) permet le passage d'une tige filetée du boulon (non représenté) permettant le serrage de la colonnette (C) dans la portion cylindrique (21) de l'extrémité du bras (20), notamment à l'aide de la partie mâle insérée dans les glissières (5) de ladite colonnette (C). Cette partie mâle forme l'extrémité opposée à la tige filetée boulonnée de l'organe de liaison mécanique reliant la mâchoire fixe (2) et la colonnette (C).

La figure 6, montrant à nouveau la mâchoire fixe (2), en coupe longitudinale, permet de préciser la disposition relative des éléments fonctionnels la constituant. Ainsi, le crochet (23) permettant l'accrochage de l'extrémité d'un ressort de traction classique (non représenté) apparaît, et la forme de la portion transversale de glissière est précisée. Dans ce cas, le longeron (L) étant oblong, la forme de la glissière, en section transversale, comporte une zone horizontale (24) portée par la mâchoire fixe (2).

Cette zone horizontale peut être élargie si la mâchoire mobile (1) est bloquée en position écartée, par exemple si le longeron oblong est plus large.

Le positionnement et la configuration précis de la surface plane (15) supposée servir de butée à la tige de blocage commandée par la molette (4) sont également montrés plus en détail dans cette figure.

Lorsque la tige de blocage n'est pas en contact avec ladite surface (15), le tiroir en U (3) de la mâchoire mobile (1) peut coulisser dans le logement (14). A l'ouverture de la pince, le ressort (non représenté) rappelle ladite mâchoire mobile (1) vers sa position de fermeture par exemple au contact de la mâchoire fixe (2).

Cette pièce de liaison (P) facilite considérablement le montage des éléments verticaux de type panneaux de séparation, et le rend possible même sur une structure déjà montée.

A ce titre, elle représente une amélioration importante dans la conception des éléments modulaires utilisés pour l'élaboration de mobilier de bureau configurable de type bureau paysager.

La configuration expliquée en détail ci-dessus n'est bien entendu qu'un exemple non limitatif de l'invention, qui englobe aussi les variantes qui sont incluses dans le domaine délimité par les revendications annexées.

## Revendications

1. Pièce de liaison (P) entre deux poutrelles (L, C) d'une structure de type applicable à du mobilier de bureau modulable suivant de multiples configurations et notamment susceptible de comporter des panneaux verticaux et horizontaux (T), ladite pièce (P) permettant un déplacement translatif par coulissement de chaque poutrelle (L, C) et sa fixation en tout point de positionnement relatif,
caractérisée en ce que les moyens de coulissement par rapport à l'une des deux poutrelles (L) sont constitués d'une glissière de largeur variable présentant une configuration fermée de largeur minimale correspondant à l'ajustement de ladite poutrelle (L) dans la glissière et une configuration ouverte de largeur maximale permettant la libération de la poutrelle (L), ladite pièce de liaison (P) comportant des moyens de blocage (4) de la configuration de la glissière en n'importe quelle largeur comprise entre lesdites valeurs minimale et maximale, et un mécanisme de rappel ramenant la glissière à sa configuration de largeur minimale en l'absence de blocage.

2. Pièce de liaison (P) entre deux poutrelles (L, C) d'une structure de type applicable à du mobilier de bureau selon la revendication 1, caractérisée en ce que le déplacement translatif par rapport à la seconde poutrelle (C) est réalisé à l'aide d'un élément mâle ou coulisseau disposé à l'extrémité d'un organe relié mécaniquement à ladite pièce de liaison (P), qui coopère avec une glissière (5) pratiquée dans ladite seconde poutrelle (C).

3. Pièce de liaison (P) entre deux poutrelles (L, C) d'une structure de type applicable à du mobilier de bureau selon la revendication 2, caractérisée en ce que ledit élément mâle ou coulisseau est mobile en translation rectiligne par rapport à ladite pièce de liaison (P), le déplacement rectiligne étant constitutif du blocage / déblocage de ladite seconde poutrelle (C) par rapport à la pièce de liaison (P) par serrage / desserrage de leurs surfaces de contact, provoqué par le rapprochement / éloignement de l'élément mâle ou coulisseau et de la pièce de liaison (P).

4. Pièce de liaison (P) entre deux poutrelles (L, C) d'une structure de type applicable à du mobilier de bureau selon la revendication 3, caractérisée en ce que le blocage/déblocage est réalisé par boulonnage de l'organe muni de l'élément mâle ou coulisseau dans la pièce de liaison (P), la réalisation du serrage/desserrage étant possible depuis l'intérieur de celle-ci uniquement lorsque la glissière de largeur variable ne loge pas de poutrelle (L).

5. Pièce de liaison (P) entre deux poutrelles (L, C) d'une structure de type applicable à du mobilier de bureau selon l'une quelconque des revendications précédentes, caractérisée en ce que la glissière de largeur variable comporte une mâchoire fixe (2) et une mâchoire mobile (1), cette dernière coulissant dans la mâchoire fixe (2) selon une course notamment limitée par les moyens de blocage (4).

6. Pièce de liaison (P) entre deux poutrelles (L, C) d'une structure de type applicable à du mobilier de bureau selon la revendication précédente, caractérisée en ce que la mâchoire mobile (1) comporte une première partie (6) constituant d'une part une portion transversale de la glissière (7), et configurée pour s'adapter à une portion transversale correspondante d'une poutrelle (L), et d'autre part une surface (8) pouvant se situer à proximité d'une surface homologue (19) de la portion transversale résiduelle (18) de la glissière portée par la mâchoire fixe (2), ladite surface (8) étant reliée à une seconde partie formant tiroir coulissant (3) dans un logement (14) de ladite mâchoire fixe (2).

7. Pièce de liaison (P) entre deux poutrelles (L, C) d'une structure de type applicable à du mobilier de bureau selon la revendication précédente, caractérisée en ce que ledit tiroir coulissant (3) présente une section en forme de U à base incurvée (10), ladite base (10) comportant un moyen d'accrochage (11) d'un élément de rappel également fixé à la mâchoire fixe et des moyens de liaison (9) aux moyens de blocage (4).

8. Pièce de liaison (P) entre deux poutrelles (L, C) d'une structure de type applicable à du mobilier de bureau selon l'une des revendications 6 et 7, caractérisée en ce que le logement (14) de la mâchoire fixe (2) destiné à recevoir ledit tiroir (3) de la mâchoire mobile (1) comporte au moins une rampe avec une surface plane (15) d'allure parallèle à la base (10) du U, localisée sur la face dudit logement (14) opposée à ladite base (10) et orientée vers elle, la base du logement (16) comportant au surplus une lumière (17) s'étendant dans la direction du mouvement de la mâchoire mobile (1) relativement à la mâchoire fixe (2), et un moyen d'accrochage (23) de l'élément de rappel.

9. Pièce de liaison (P) entre deux poutrelles (L, C) d'une structure de type applicable à du mobilier de bureau selon la revendication précédente, caractérisée en ce que les moyens de blocage (4) des mâchoires (1, 2) l'une relativement à l'autre sont opérables manuellement et consistent en une molette (4) fixée à une tige filetée libre en rotation dans un orifice pratiqué dans le tiroir (3) de la mâchoire mobile (1), et coopérant avec un écrou disposé dans un logement (9) dudit tiroir, l'extrémité plane de ladite tige filetée s'appliquant au moment du blocage contre la surface plane (15) équipant le logement (14) de la mâchoire fixe (2).

10. Pièce de liaison (P) entre deux poutrelles (L, C) d'une structure de type applicable à du mobilier de bureau selon l'une des revendications 7 à 9, caractérisée en ce que l'élément de rappel est un ressort de traction fixé à ses deux extrémités aux moyens d'accrochage prévus sous forme de crochets (23, 11) dans la mâchoire fixe (2) et dans la mâchoire mobile (1).

## Patentansprüche

1. Verbindungsteil (P) zwischen zwei Trägem (L, C) einer bei Büromöbeln anwendbaren Struktur, die in vielfältigen Konfigurationen variierbar anordenbar ist und insbesondere geeignet ist, vertikale und horizontale Felder (T) zu umfassen, wobei das Verbindungsteil (P) eine translative Verlagerung durch Verschieben jedes Trägers (L, C) und seine Fixierung in jeder Relativposition erlaubt, dadurch gekennzeichnet,
dass die Mittel zum Verschieben in Bezug auf einen der zwei Träger (L) eine Schiene variabler Länge aufweisen, die eine geschlossene Stellung mit minimaler Breite entsprechend dem Sitz des besagten Trägers (L) in der Schiene und eine geöffnete Stellung mit maximaler Breite, die das Lösen des Trägers (L) erlaubt, aufweist. Dabei umfasst das Verbindungsteil (P) Blockiermittel (4) für die Stellung der Schiene in beliebiger Breite zwischen den genannten Minimal- und Maximalwerten und einen Federmechanismus, der in Abwesenheit der Blockierung die Schiene in ihre Minimalstellung zurückstellt.

2. Verbindungsteil (P) zwischen zwei Trägem (L, C) einer bei Büromöbeln anwendbaren Struktur nach Anspruch 1, dadurch gekennzeichnet, dass die translative Verlagerung in Bezug auf den zweiten Träger (C) mit Hilfe eines männlichen Elements oder eines Schiebers realisiert wird, das bzw. der am äußeren Ende eines mechanisch mit dem besagten Verbindungsteil (P) verbundenen Organs angeordnet ist, das mit einer Schiene (5) zusammenwirkt, die in dem besagten zweiten Träger (C) vorhanden ist.

3. Verbindungsteil (P) zwischen zwei Trägern (L, C) einer bei Büromöbeln anwendbaren Struktur nach Anspruch 2, dadurch gekennzeichnet, dass das besagte männliche Element oder der Schieber beweglich ist in geradliniger Verlagerung in Bezug auf das besagte Verbindungsteil (P), wobei die geradlinige Verlagerung, die Blockierung/Deblockierung des besagten zweiten Trägers (C) in Bezug auf das Verbindungsteil (P) durch Festziehen/Lösen ihrer Kontaktoberflächen, hervorgerufen durch das Annähern und Entfernen des männlichen Elements oder des Schiebers und des Verbindungsteils (P), verursacht.

4. Verbindungsteil (P) zwischen zwei Trägem (L, C) einer bei Büromöbeln anwendbaren Struktur nach Anspruch 3, dadurch gekennzeichnet, dass die Blockierung/Deblockierung durch Verspannen des Befestigungsorgans des männlichen Elements oder des Schiebers in dem Befestigungsteil (P) erfolgt, wobei die Realisierung des Spannens/Lösens möglich ist von seinem Inneren her, nur wenn die Schiene variabler Größe nicht den Träger (L) aufnimmt.

5. Verbindungsteil (P) zwischen zwei Trägem (L, C) einer bei Büromöbeln anwendbaren Struktur nach einem der vorangehenden Ansprüche, dadurch gekennzeichnet, dass die Schiene variabler Größe eine feste Backe (2) und eine bewegliche Backe (1) aufweist, wobei letztere in der festen Backe (2) gemäß einer Bahn, vorzugsweise begrenzt durch Blockiermittel (4), verschiebbar ist.

6. Verbindungsteil (P) zwischen zwei Trägern (L, C) einer bei Büromöbeln anwendbaren Struktur nach dem vorangehenden Anspruch, dadurch gekennzeichnet, dass die bewegliche Backe (1) einen ersten Abschnitt (6) aufweist, der einerseits einen querverlaufenden Abschnitt der Schiene (7) bildet und zum Anpassen an einem entsprechenden querverlaufenden Abschnitt eines Trägers (L) ausgestaltet ist, und andererseits eine Fläche (8) aufweist, die in der Nähe einer entsprechenden Fläche (19) des übrigen querverlaufenden, durch die feste Backe (2) getragenen Abschnitts (18) der Schiene angeordnet werden kann, wobei die besagte Fläche (8) mit einem zweiten Abschnitt verbunden ist, der einen Schieber (3) in einem Lager (14) der besagten festen Backe (2) bildet.

7. Verbindungsteil (P) zwischen zwei Trägem (L, C) einer bei Büromöbeln anwendbaren Struktur nach dem vorangehenden Anspruch, dadurch gekennzeichnet, dass der besagte Schieber (3) einen Abschnitt in Form eines U mit einer gekrümmten Basis (10) aufweist, wobei besagte Basis (10) ein Befestigungsmittel (11) (Einhängemittel) eines Federelements, das in gleicher Weise an der festen Backe befestigt ist, und Verbindungsmittel (9) zu den Blockiermitteln (4) aufweist.

8. Verbindungsteil (P) zwischen zwei Trägern (L, C) einer bei Büromöbeln anwendbaren Struktur nach einem der Ansprüche 6 und 7, dadurch gekennzeichnet, dass das Lager (14) der festen Backe (2) das zum Aufnehmen des besagten Schiebers (3) der beweglichen Backe (1) ausgebildet ist, zumindest eine Rampe mit einer ebenen Fläche (15) aufweist, die parallel zur Basis (10) des Us angeordnet ist und auf der Seite des besagten Lagers (14) gegenüber der besagten Basis (10) angeordnet ist und zu dieser gerichtet ist, wobei die Basis des Lagers (16) außerdem eine Öffnung (17), die sich in der Bewegungsrichtung der beweglichen Backe (1) relativ zu der festen Backe (2) erstreckt und ein Befestigungsmittel (23) (Einhängemittel) des Federelements aufweist.

9. Verbindungsteil (P) zwischen zwei Trägern (L, C) einer bei Büromöbeln anwendbaren Struktur nach dem vorangehenden Anspruch, dadurch gekennzeichnet, dass die Blockiermittel (4) der Backen (1, 2) zu einander relativ manuell betätigbar sind und ein Rad (4) aufweisen, welches an einer Schraubspindel angebracht ist, die frei drehbar in einer in dem Schieber (3) der beweglichen Backe (1) ausgebildeten Öffnung ist und mit einer Mutter zusammenwirkt, die in einem Lager (9) des besagten Schiebers angeordnet ist, wobei das ebene äußere Ende besagter Schraubspindel sich im Zeitpunkt der Blockierung gegen die ebene Oberfläche (5) am Lager (14) der festen Backe (2) abstützt.

10. Verbindungsteil (P) zwischen zwei Trägern (L, C) einer bei Büromöbeln anwendbaren Struktur nach einem der Ansprüche 7 - 9, dadurch gekennzeichnet, dass das Federelement eine Zugfeder ist, die an ihren zwei äußeren Enden an Befestigungsmitteln (Einhängemittel) befestigt ist, die in Form von Haken (23, 11) in der festen Backe und in der beweglichen Backe (1) vorgesehen sind.

## Claims

1. Connecting piece (P) between two small beams (L, C) of a structure of the type applicable to office furniture which can be assembled in modular fashion according to multiple configurations and which is suitable in particular for comprising vertical and horizontal panels (T), the said piece (P) permitting a translatory movement by sliding of each small beam (L, C) and the fixing thereof in any relative positioning point,
characterized in that the sliding means with respect to one of the two small beams (L) are constituted by a slide of variable width having a closed configuration of minimum width corresponding to the fit of the said small beam (L) in the slide and an open configuration of maximum width permitting the release of the small beam (L), the said connecting piece (P) comprising means for locking (4) the configuration of the slide in any width between the said minimum and maximum values inclusive, and a return mechanism returning the slide to its minimum width configuration in the absence of locking.

2. Connecting piece (P) between two small beams (L, C) of a structure of the type applicable to office furniture according to Claim 1, characterized in that the translatory movement with respect to the second small beam (C) is achieved with the aid of a male element or runner disposed at the end of a part mechanically connected to the said connecting piece (P), which cooperates with a slide (5) located in the said second small beam (C).

3. Connecting piece (P) between two small beams (L, C) of a structure of the type applicable to office furniture according to Claim 2, characterized in that the said male element or runner is movable in linear translation with respect to the said connecting piece (P), the linear movement constituting the locking/unlocking of the said second small beam (C) with respect to the connecting piece (P) by clamping/releasing their contact surfaces, caused by bringing together/moving apart the male element or runner and the connecting piece (P).

4. Connecting piece (P) between two small beams (L, C) of a structure of the type applicable to office furniture according to Claim 3, characterized in that the locking/unlocking is achieved by bolting the part equipped with the male element or runner in the connecting piece (P), the clamping/releasing being possible from the inside thereof solely when the slide of variable width does not house a small beam (L).

5. Connecting piece (P) between two small beams (L, C) of a structure of the type applicable to office furniture according to one of the preceding Claims, characterized in that the slide of variable width comprises a fixed jaw (2) and a movable jaw (1), the latter sliding in the fixed jaw (2) according to a path limited in particular by the locking means (4).

6. Connecting piece (P) between two small beams (L, C) of a structure of the type applicable to office furniture according to the preceding Claim, characterized in that the movable jaw (1) comprises a first part (6) constituting on the one hand a transverse portion of the slide (7), and configured to adapt to a corresponding transverse portion of a small beam (L), and on the other hand a surface (8) which may be located close to an homologous surface (19) of the remaining transverse portion (18) of the slide carried by the fixed jaw (2), the said surface (8) being connected to a second part forming a sliding drawer (3) in a housing (14) of the said fixed jaw (2).

7. Connecting piece (P) between two small beams (L, C) of a structure of the type applicable to office furniture according to the preceding Claim, characterized in that the said sliding drawer (3) has a U-shaped cross-section with curved base (10), the said base (10) comprising a means of hooking (11) a return element also fixed to the fixed jaw, and connecting means (9) to the locking means (4).

8. Connecting piece (P) between two small beams (L, C) of a structure of the type applicable to office furniture according to one of Claims 6 and 7, characterized in that the housing (14) of the fixed jaw (2) intended to receive the said drawer (3) of the movable jaw (1) comprises at least one ramp with a flat surface (15) of an attitude parallel to the base (10) of the U, located on the face of the said housing (14) opposite the said base (10) and facing towards it, the base of the housing (16) further comprising a slot (17) extending in the direction of movement of the movable jaw (1) with respect to the fixed jaw (2), and a means of hooking (23) the return element.

9. Connecting piece (P) between two small beams (L, C) of a structure of the type applicable to office furniture according to the preceding Claim, characterized in that the means of locking (4) the jaws (1, 2) with respect to each other are operable manually and consist of a wheel (4) fixed to a threaded rod free to rotate in an orifice located in the drawer (3) of the movable jaw (1) and cooperating with a nut disposed in a housing (9) of the said drawer, the flat end of the said threaded rod being applied, at the time of locking, against the flat surface (15) equipping the housing (14) of the fixed jaw (2).

10. Connecting piece (P) between two small beams (L, C) of a structure of the type applicable to office furniture according to one of Claims 7 to 9, characterized in that the return element is a tension spring fixed at its two ends to the hooking means provided in the form of hooks (23, 11) in the fixed jaw (2) and in the movable jaw (1).
